# EUROPEAN PATENT SPECIFICATION

(11) **EP 2 540 149 B1**
(45) Date of publication and mention of the grant of the patent: **08.01.2014**
(21) Application number: 11192757.0
(22) Date of filing: 09.12.2011
(51) Int. Cl.: A01B 59/00, A01B 59/06

(54) **Tractor implement hitch**
Traktorwerkzeuganbauvorrichtung
Crochet à outils pour tracteur

(30) Priority: 30.06.2011 GB 201111178
(43) Date of publication of application: 02.01.2013
(73) Proprietor: AGCO International GmbH, 8212 Neuhausen am Rheinfall (CH)
(72) Inventor: Stich, Ulrich, 87662 Blonhofen (DE)
(74) Representative: Smith, Louise Marie

(56) References cited:
- EP-A1- 2 130 420
- DE-A1- 2 854 188
- DE-A1- 3 150 587
- DE-A1- 3 334 472
- GB-A- 1 603 204

## Description

This invention relates to tractors having implement hitches in which a pair of lower links are pivotally mounted on a tractor chassis and each link has a lifting rod connected with a hitch actuator which is used to pivot the lower link relative to the tractor chassis and hence raise and lower any implement connected with the lower links.

Such hitches are standard at the rear of agricultural and industrial tractors and it is well known to have a towing hitch mounted on the rear of such a tractor at a location between the lower links for the attachment of a trailer or implement via a drawbar. Each of the lower links are connected to two respective lift arms or a rocker by lift rods. The lift arms or rocker are connected to actuators which are movable by hydraulic cylinders which are controlled by the operator in the tractor cab. Problems can arise with such installations as the lower links can impede the ability of any drawbar mounted on the towing hitch and/or operated by the Power Take Off shaft (PTO) to pivot relative to the rear of the tractor thus restricting the turning capability of the tractor and the draw bar.

EP 09006865.1 discloses a tractor having a chassis with an implement hitch comprising a pair of lower links pivoted on the tractor chassis, each link having a lift rod connected with a hitch actuator which is used to raise the lower link relative to the chassis. Each lift rod is provided with a means for shortening its effective length in a stepwise manner so that the lower links can be raised to a higher position relative to the tractor chassis when the hitch actuator is used. Each lift rod is provided with a locking device which is manually releasable to change the effective length of the lift rods.

GB1603204 discloses a three point linkage on an agricultural tractor in which a double acting ram is interposed between two parts of at least one lifting rod. The ram comprises a piston which can slide within a cylinder. Movement of the piston within the cylinder thus lengthens or shortens the length of the lifting rod. The ram is controlled by means of a ram control valve which can be locked to hold the lifting rods in a desired position.

The lower links may be held in the higher position (parking position) by a spring loaded locking device which holds the lift rod in a shortened state.

With this method the lower links can be held in the higher position out of the way of the PTO and the attachment hitch.

If it desirable to move the lower links from the higher position (parking position) to a lower position (an operational position) for attachment to an implement, the operator must first extend, that is release the shortened state of the lift rods to lower the lower links to a normal maximum height position (normal position) before moving the lower links to the lower position. If the operator forgets to release the locking device to release the shortened state of the lift rods and instead moves the lower links by operating the hydraulic cylinders the lift rods can come into contact with the lower links and can damage the lift rod spindle.

It is an aim of the present invention to provide a locking device for holding a linkage system in a high position clear of the drawbar which can be automatically released by movement of the links to a lower position.

According to the invention there is provided a tractor with an implement hitch as claimed in claim 1. Preferred features of the hitch are set out in the dependent claims.

The present invention will now be described, by way of example only, with reference to the accompanying drawings in which:-
Figure 1 shows a side view of a rear portion of a tractor chassis fitted with an implement hitch in its normal maximum height position,
Figure 2 shows the implement hitch of Figure 1 raised to a higher or parking position,
Figure 3 shows a detailed view of the area labelled A in figure 2 showing the automatically releasable locking means in accordance with the invention.
Figures 4, 5 and 6 show the automatically releasable locking means of Figure 3 in disengaged and engaged conditions respectively.

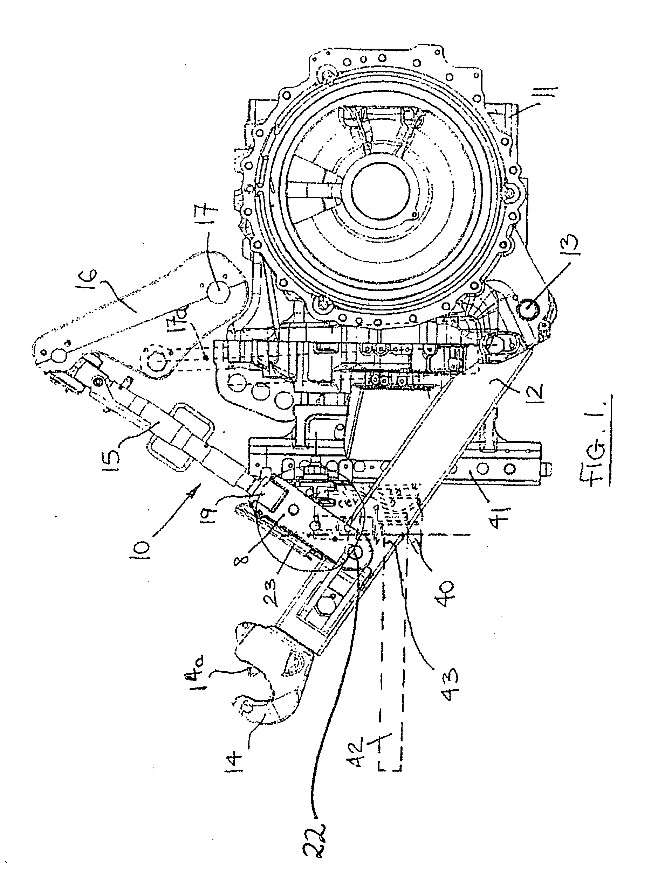

Referring to the drawings, Figure 1 shows part of a three point hitch 10 mounted on the rear of a tractor chassis 11. The hitch has two lower links 12, only which one of which is visible Figure 1, which are pivotally mounted at 13 on the tractor chassis 11. Each lower link has at its outer end a coupling hook 14 which is provided with a conventional spring loaded latch 14a

As is normal each lower link 12 is raised and lowered relative to the chassis 11 by lift rods 15 which are connected with lift arms (or rocker) 16 which are in turn mounted on the chassis by a cross shaft 17. As is conventional, the lift arms 16 are rotated with cross shaft 17 by one or more hitch actuators 17a which act between the lift arms and the tractor chassis. The three point hitch 10 is completed by a so-called "top-link"(not shown) which is again pivotally mounted on the tractor chassis 11.

Figure 1 shows the lower links 12 in their normal maximum height position (or normal position). A towing hitch 40 is mounted in a conventional manner on vertical rails 41 located between links 12. As can be seen from Figure 1, a trailer drawbar 42 connected with hitch 40 may interfere with the links 12 in the region 43 thus restricting the turning of the associated trailer.

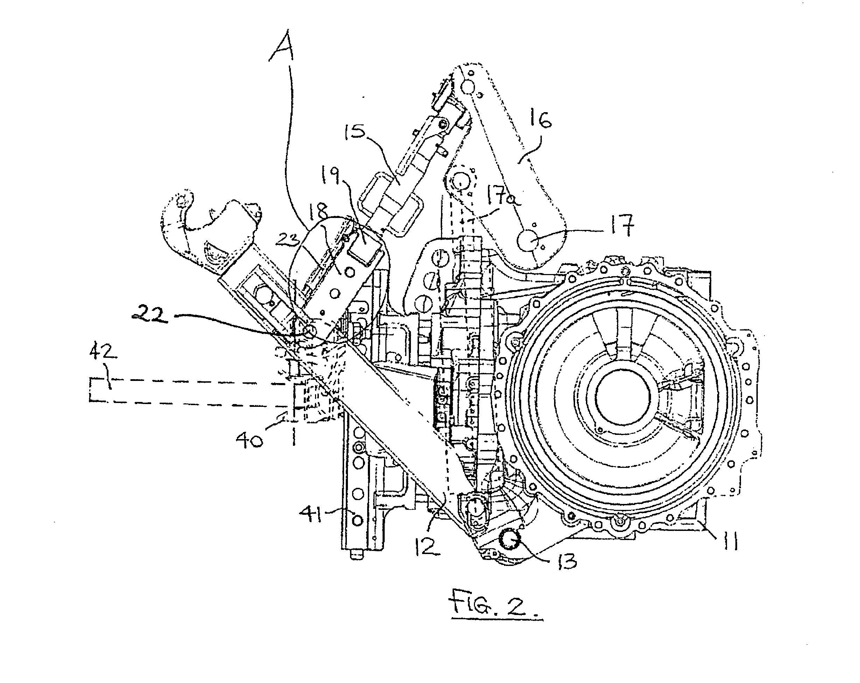

The effective length of each of the lift rods 15 can be shortened in a stepwise manner so that the lower links 12 can be raised to a higher position called the parking position, as shown in Figure 2. The actuators 17a are used to raise the lower links to the parking position where the drawbar 42 no longer interferes with the lower links 12.

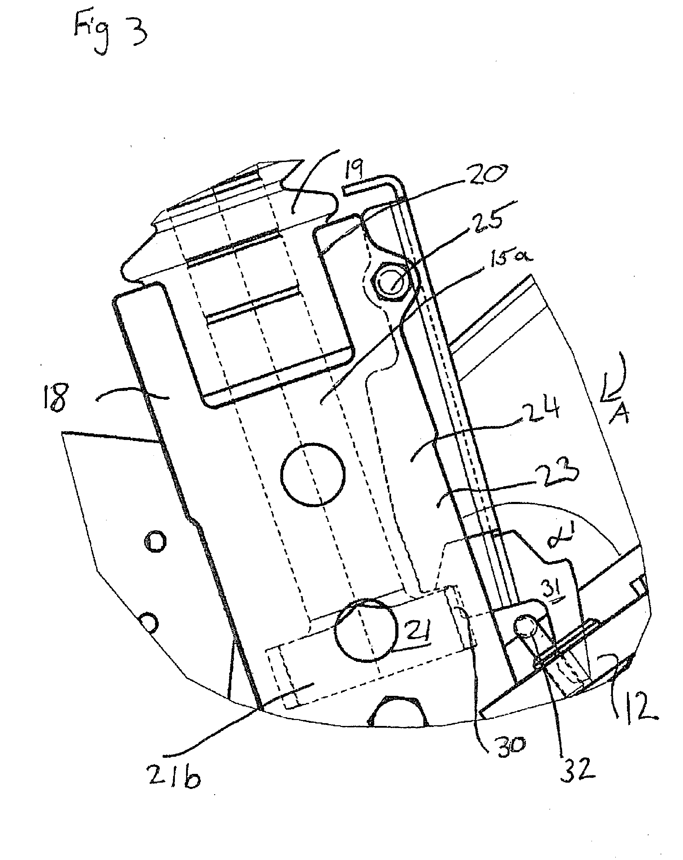

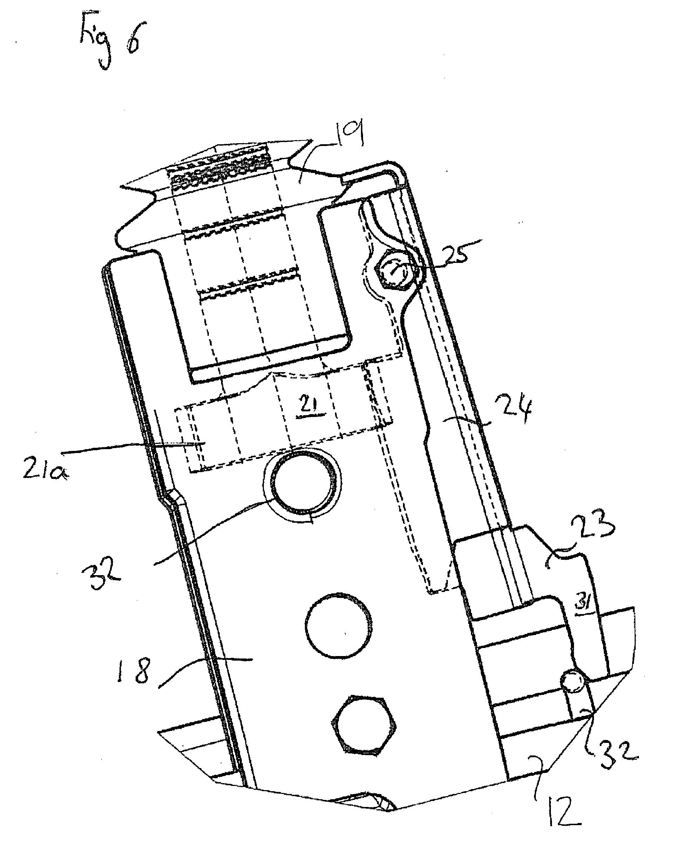

As best seen in Figures 3 to 6, the lower end of each lift rod 15 comprises a pair of plates 18 welded to a collar 19 through which the main body 15a of each lift rod is slideable within a bore 20. On the lower end of 15a of lift rod 15 is provided a piston-like member 21 which can move between end positions 21 a and 21 b shown in Figures 6 and 3 respectively.

The plates 18 are secured to the associated lower link 12 by a bolt 22 (shown in fig. 1 and 2). Also mounted on the plates 18 is a locking means 23 which comprises an arm 24 and an engagement means 32. The arm 24 is pivoted on the plates 18 by a bolt 25. Engagement means 32 is located on the surface of the lower link 12. The arm 24 is spring-loaded so as to tend to rotate about the pivot bolt 25 in the direction of the arrow A of Figure 3. In Figure 3 the lower links 12 are in the parking position. The piston like member 21 of the lift rod is shown engaged with a recess 30 of arm 24 which holds the lower link 12 in the parking position. The locking means 23 is said to be engaged. Arm 24 also has a hook formation 31 which can come into contact with the engagement means 32 on the lower link 12. Engagement means 32 is a protrusion 32, for example a bolt or pin which extends from the surface of the lower link 12. The protrusion may be provided with screw means and may be detachable from the link 12. Alternatively the protrusion may be spring loadedly attached to the link so that it may be depressed into the link 12.

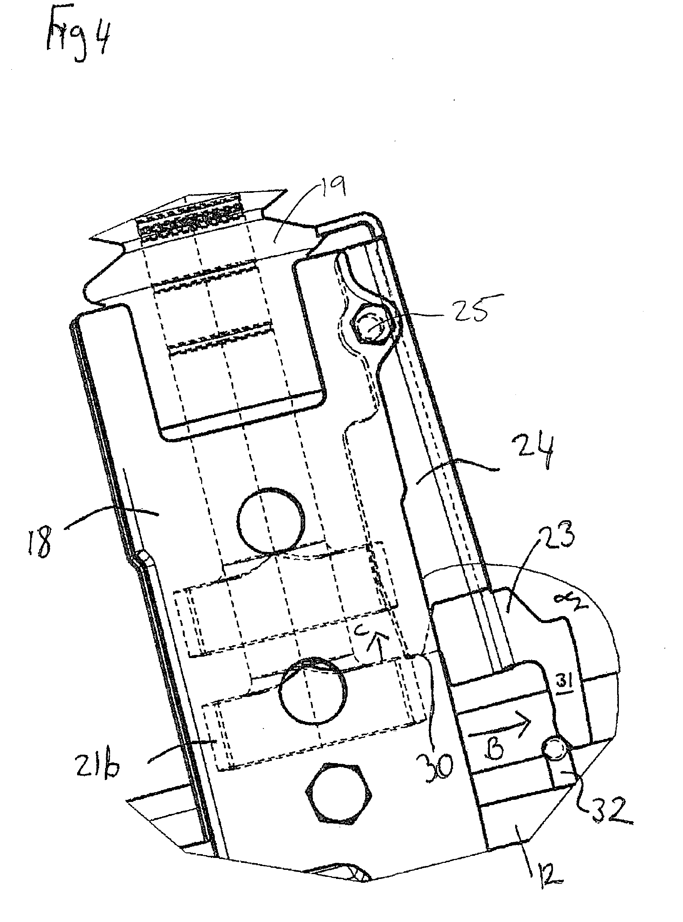

Figure 4 shows what happens to the lift rods 15 and locking device 23 as the lower links move from the parking to the normal position. To lower the lower links 12 to the normal position it is necessary to release the engagement of the piston like member 21 with the recess 30 (see Figure 3) of the locking means 23. This is achieved automatically by lowering the lower links 12 by the actuators controlled by the operator in the cab. As the lower links 12 are lowered the angle between lift rod 15 and lower link 12 changes from α₁ to α₂. Fixed engagement means 32 attached to lower link 12 moves the hook formation 31 in the direction of arrow B. Further movement of the hook formation 31 causes the arm 24 to pivot away from the piston like member 21. This releases the piston like member 21 from the recess 30 of arm 24 allowing the piston like member 21 to move up in the direction of arrow C bringing the lower links 12 to the normal position. The locking means 23 is then said to be in the disengaged position.

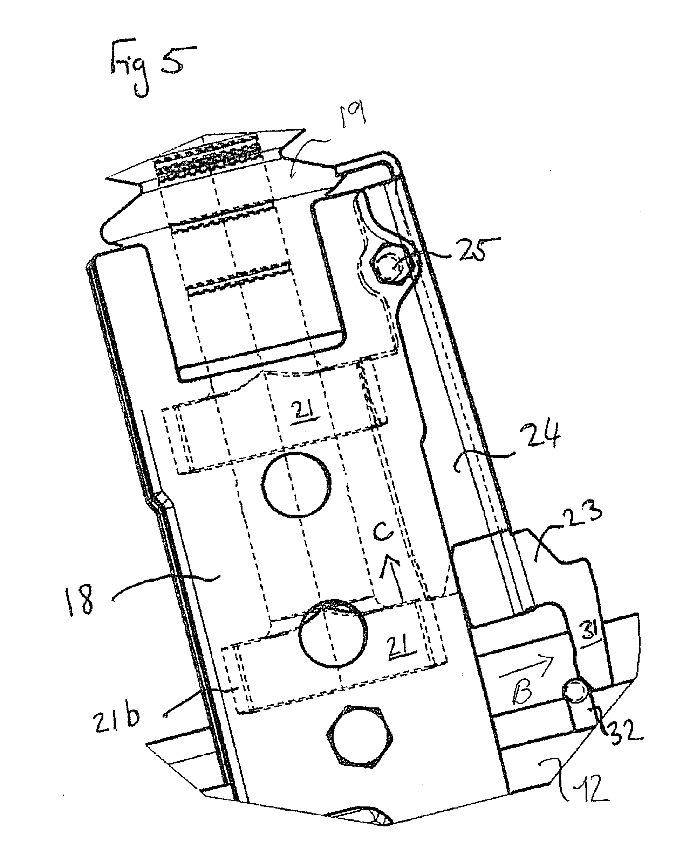

Figures 5 and 6 show the upward movement of the piston like member 21 in the direction of arrow C. A bolt 32 through plates 18 can secure the links in the normal position. For moving to the parking position it is necessary to remove or move the bolt 32.

## Claims

1. A tractor implement hitch (1) comprising a pair of lower links (12) connected to respective lift rods (15) which are moved by a hitch actuator (17a) wherein each lift rod (15) is provided with a means for shortening its effective length so that the lower links can be raised to a higher position when the hitch actuator (17a) is used, wherein the hitch (1) is provided with a locking means (23) to lock each lift rod (15) and hold the lower links (12) in the higher position, said locking means (23) being automatically releasable upon downward movement of the lower links (12), **characterised in that** the locking means (23) comprises a pivotal arm(24)and an engagement means (32) said engagement means (32) coming into contact with the pivotal arm (24) upon downwards movement of the lower link (12) pivoting the pivotal arm (24) and releasing it from the lift rod (15).

2. A tractor implement hitch (1) as claimed in claim 1 wherein the engagement means (32) comprises a protrusion (32) on the lower link.

3. A tractor implement hitch (1) as claimed in claim 1 or claim 2 wherein the engagement means (32) comprises a bolt.

4. A tractor implement hitch 1 as claimed in any preceding claim wherein the engagement means (32) is removeable.

## Patentansprüche

1. Kupplung oder Anhängungsvorrichtung (1) für ein Anbaugerät oder Werkzeug eines Zugfahrzeugs oder Traktors mit einem Paar unterer Verbindungen (12), die mit zugeordneten Hubstangen (15) verbunden sind, die durch deinen Aktuator (17a) der Kupplung oder Anhängungsvorrichtung bewegt werden, wobei jede Hubstange (15) mit einem Organ zur Verkürzung ihrer effektiven Länge ausgestattet ist, so dass die unteren Verbindungen auf eine höhere Position angehoben werden können, wenn der Aktuator (17a) verwendet wird, wobei die Kupplung oder Anhängungsvorrichtung (1) mit einem Rast- oder Verriegelungsorgan (23) ausgestattet ist zur Verrastung oder Verriegelung jeder Hubstange (15) und zum Halten der unteren Verbindungen (12) in der höheren Position, wobei das Rast- oder Verriegelungsorgan (23) mit einer Bewegung der unteren Verbindungen (12) nach unten automatisch lösbar ist, **dadurch gekennzeichnet, dass** das Verriegelungsorgan (23) einen Schwenkarm (24) und ein hiemit in Wechselwirkung tretendes oder ein eingreifendes Organ (32) aufweist, wobei das Organ (32) mit einer Bewegung der unteren Verbindung (12) nach unten mit dem Schwenkarm (24) in Kontakt kommt, womit der Schwenkarm (24) verschwenkt wird und dieser von der Hubstange (15) gelöst wird.

2. Kupplung oder Anhängungsvorrichtung (1) nach Anspruch 1, wobei das Organ (32) einen Vorsprung (32) an oder auf der unteren Verbindung aufweist.

3. Kupplung oder Anhängungsvorrichtung (1) nach Anspruch 1 oder 2, wobei das Organ (32) einen Bolzen besitzt.

4. Kupplung oder Anhängungsvorrichtung (1) nach einem der vorhergehenden Ansprüche, wobei das Organ (32) entfernbar ist.

## Revendications

1. Crochet d'accessoire de tracteur (1) comprenant une paire de biellettes inférieures (12) couplées à des tiges de levage (15) respectives qui sont déplacées par un actionneur de crochet (17a), dans lequel chaque tige de levage (15) est équipée d'un moyen destiné à raccourcir sa longueur utile de telle sorte que les biellettes inférieures peuvent être soulevés vers une position plus élevée lorsque l'actionneur de crochet (17a) est utilisé, dans lequel le crochet (1) est équipé d'un moyen de verrouillage (23) afin de verrouiller chaque tige de levage (15) et de maintenir les biellettes inférieures (12) dans la position plus élevée, ledit moyen de verrouillage (23) pouvant être libéré automatiquement lors d'un mouvement vers le bas des biellettes inférieures (12), **caractérisé en ce que** le moyen de verrouillage (23) comprend un bras pivotant (24) et un moyen de couplage (32), ledit moyen de couplage (32) entrant en contact avec le bras pivotant (24) lors d'un mouvement vers le bas de la biellette inférieure (12) faisant pivoter le bras pivotant (24) et le libérant de la tige de levage (15).

2. Crochet d'accessoire de tracteur (1) selon la revendication 1, dans lequel le moyen de couplage (32) comprend une saillie (32) sur la biellette inférieure.

3. Crochet d'accessoire de tracteur (1) selon la revendication 1 ou 2, dans lequel le moyen de couplage (32) comprend un boulon.

4. Crochet d'accessoire de tracteur (1) selon l'une quelconque des revendications précédentes, dans lequel le moyen de couplage (32) est amovible.
